## Europäisches Patentamt
## European Patent Office
## Office européen des brevets

(11) Veröffentlichungsnummer: **0 126 253**
**B1**

(12) # EUROPÄISCHE PATENTSCHRIFT

(45) Veröffentlichungstag der Patentschrift:
24.09.86

(51) Int. Cl.⁴: **H 02 P 7/62,** B 23 B 45/02

(21) Anmeldenummer: **84103771.6**

(22) Anmeldetag: **05.04.84**

(54) **Handwerkzeugmaschine, insbesondere Bohrmaschine.**

(30) Priorität: **20.04.83 DE 3314316**

(43) Veröffentlichungstag der Anmeldung:
**28.11.84 Patentblatt 84/48**

(45) Bekanntmachung des Hinweises auf die Patenterteilung:
**24.09.86 Patentblatt 86/39**

(84) Benannte Vertragsstaaten:
**DE FR GB**

(56) Entgegenhaltungen:
**EP-A-0 018 465**
**DE-C-371 450**
**US-A-2 968 756**

**Patent Abstracts of Japan, Band 3, Nr. 124, 17.
Oktober 1979, Seite 9E144 & JP-A-54-99918**

(73) Patentinhaber: **ROBERT BOSCH GMBH, Postfach
50, D-7000 Stuttgart 1 (DE)**

(72) Erfinder: **Suchowerskyj, Wadym, Dr.- Ing.,
Holdergasse 26, D-7141 Schwieberdingen (DE)**

## Beschreibung

### Stand der Technik

Die Erfindung geht aus von einer Handwerkzeugmaschine nach der Gattung des Hauptanspruchs. Es ist schon eine solche Handwerkzeugmaschine aus der EP-A-0 018 465 bekannt. Dort wird die Stellung der Spannbacken eines Bohrfutters durch einen mechanischen Taster ermittelt, der den ertasteten Wert an eine Steuereinrichtung für den Motor der Handwerkzeugmaschine weiter gibt. Die Drehzahl dieses Motors wird entsprechend dem so indirekt ermittelten Schaftdurchmesser des in das Bohrfutter eingespannten Bohrerschaftes gesteuert. Dabei wird die Stellung der Spannbacken von einem rotierenden Teil auf rein mechanischem Wege zu einem feststehenden Potentiometer übertragen. Die mechanische Schnittstelle ist sehr verschleißanfällig.

Gemäß der ebenfalls bekannten DE-A 22 11 077 wird der sich durch Abnutzung ändernde Schleifscheiben-Durch-Messer bei einer Schleifmaschine mittels einer Lichtschranke abgetastet, d.h. in ein statisches Signal umgesetzt, nämlich in eine analoge Spannung oder ein logisches Signal aus mehreren Lichtschranken. Die Auswertung solcher Signale ist problematisch, weil sie vielen Fehlereinflüssen ausgesetzt ist.

Durch die DE-C-371 450 ist eine Regelungsvorrichtung für Kraftmaschinen bekannt, bei der zur Erfassung einer axialen Relativverschiebung zwischen einem Taster (Kontaktfeder) und einer rotierenden Trommel Kontaktstücke mit in Richtung der Rotationsachse sich ändernder Breite (gleichmäßig) über den Trommelumfang verteilt vorgesehen sind, so daß die Übertragung des Stellungssignals in einem Tastverhältnis codiert erfolgt.

### Vorteile der Erfindung

Die erfindungsgemäße Handwerkzeugmaschine mit den kennzeichnenden Merkmalen des Hauptanspruchs, hat demgegenüber den Vorteil, daß die Übertragung der ertasteten, ein Maß für den Werkzeugdurchmesser darstellenden Stellung berührungslos und in einem Tastverhältnis codiert erfolgt, was die genaue und sichere Auswertung mittels digital arbeitender elektronischer Schaltungen begünstigt. Die gezeigte Zackenblende eignet sich dabei sowohl für die Übertragung mittels einer Lichtschranke als auch für die Übertragung mittels einer weniger schmutzempfindlichen Hallschranke.

Durch die in den Unteransprüchen aufgeführten Maßnahmen sind vorteilhafte Weiterbildungen und Verbesserungen der im Hauptanspruch angegebenen Handwerkzeugmaschine möglich. Besonders vorteilhaft ist die trapezförmige Ausgestaltung der einzelnen Blendenteile. Hier ist die Veränderung des Tastverhältnisses beim axialen Verschieben der Blende besonders feinfühlig, weil jede Flanke mit ihrer Steigung zur Impulslängenänderung beiträgt.

### Zeichnung

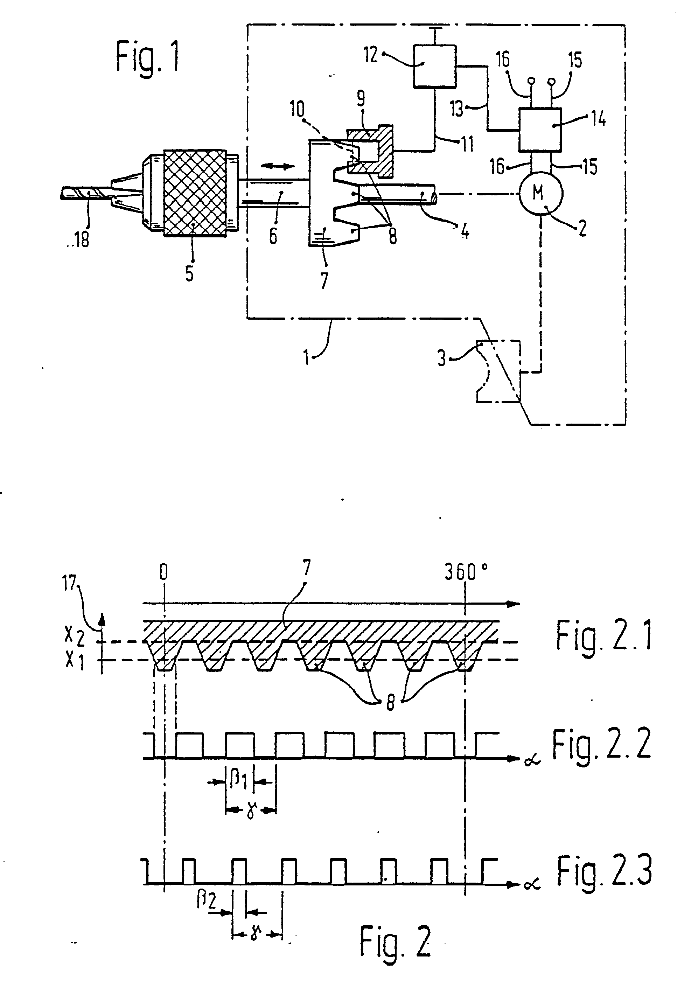

Ein Ausführungsbeispiel des Erfindungsgegenstandes ist in der Zeichnung dargestellt und in der nachfolgenden Beschreibung näher erläutert. Es zeigen Figur 1 eine vereinfachte Darstellung einer erfindungsgemäß gestalteten Handbohrmaschine und Figur 2 eine grafische Darstellung des Prinzips der Codierung des Tastverhaltnisses-

### Beschreibung des Ausführungsbeispiels

In einer Handbohrmaschine 1 mit einem Motor 2 und einer Einschalthandhabe 3 lagert eine Arbeitsspindel 4. Auf die Arbeitsspindel 4 ist ein Spannfutter 5 aufgeschraubt, das über eine Hülse 6 mit einer topfförmigen Blende 7 verbunden ist. Die topfförmige Blende 7 besitzt gleiche und gleichmäßig auf ihren Umfang verteilte Blendenteile 8, die als axial gerichtete, trapezförmige Zähne ausgebildet sind. Ein der Blende 7 zugeordneter Körper 9 sitzt fest im Gehäuse der Handbohrmaschine 1 und ist so ausgebildet, daß er eine Licht- oder Hall-Schranke 10 errichten kann. Die Blende 7 und der Körper 9 mit der Licht- oder Hall-Schranke 10 bilden einen Impulsgeber der über eine elektrische Leitung 11 an eine an sich bekannte Auswerteschaltung in einem Block 12 angeschlossen ist. Als beispielsweise Ausführung einer solchen Auswerteschaltung kann die nach DE-OS 27 06 935 dienen. Block 12 ist über eine Leitung 13 an einen Drehzahlregler 14 angeschlossen, der in die Versorgungsleitungen 15 und 16 des Motors 2 eingeschaltet ist (Figur 1). Figur 2.1 zeigt eine Abwicklung der Blende 7 mit ihren zahnförmigen Blendenteilen 8. Durch einen Pfeil 17 ist die Lage der Rotationsachse der Blende 7 angedeutet. Die gestrichelt eingezeichneten Linien $X_1$ und $X_2$ geben zwei verschiedene Positionen der Licht- oder Hall-Schranke 10 zur Blende 7 an. Figur 2.2 stellt die Ausgangsspannung der Licht- oder Hall-Schranke in deren Stellung $X_1$ dar. Dabei ist mit $\alpha$ der Drehwinkel der Blende 7, mit $\beta_1$ der die Impulslänge bestimmende Drehwinkel und mit $\gamma$ der Teilungswinkel der Blende 7 bezeichnet. In Figur 2.3 ist die Impulsfolge bei der Stellung $X_2$ der Licht- oder Hall-Schranke dargestellt. Hier ist der der Impulslänge entsprechende Drehwinkel

$\beta_2$ und der Teilungswinkel $\gamma$ angegeben. Aus diesen Darstellungen gemäß Figur 2 wird deutlich, daß sich beim Verschieben der Blende 7 in Richtung der Längsachse der Arbeitsspindel 4 - beim Einspannen eines Bohrers in das Spannfutter 5 - das Tastverhältnis $\theta = \beta/\gamma$ verändert. In der Stellung $X_1$ ergibt sich $\theta_1 = \beta_1 / \gamma$, in der Stellung $X_2$ ergibt $\theta_2 = \beta_2/\gamma$.

Die vorstehend beschriebene, verschleißfrei arbeitende Geberanordnung zur Regelung des Motors 2 der Handbohrmaschine 1, ist einfach im Aufbau. Sie liefert digital leicht auswertbare Impulsfolgen, denen selbstverständlich zusätzliche Daten, z.B. über den zu bearbeitenden Werkstoff, überlagert werden können. Derartige Daten könnten sowohl dem Block 12 als auch dem Drehzahlregler 14 direkt zugeführt werden.

**Patentansprüche**

1. Handwerkzeugmaschine (1) insbesondere Bohrmaschine, mit einer Einrichtung zur vom Werkzeugdurchmesser abhängigen Drehzahlsteuerung ihrer Arbeitsspindel (4) mittels eines werkzeugdurchmesserabhängig axial verschiebbaren Tastorgans (5, 6, 7) dadurch gekennzeichnet, daß das axial verschiebbare Tastorgan (5, 6, 7) eine rotationssymmetrische Blende (7) umfaßt, deren axiale Stellung zu einer ihre Drehachse kreuzenden Licht- oder Hall-Schranke (10) vom Durchmesser des mit dem Werkzeugspannelement (5) eingespannten Werkzeugs (18) abhängig ist und die gleiche und gleichmäßig über den Umfang der Blende (7) verteilte Blendenteile (8) mit in Richtung der Rotationsachse (Rotationsachse der Arbeitsspindel 4) sich ändernder Breite hat, und daß die Licht- oder Hall-Schranke (10) mittels einer an sich bekannten Auswerteschaltung (12) mit einem Drehzahlregler (14) des Motors (2) der Handwerkzeugmaschine (1) verbunden ist.

2. Handwerkzeugmaschine nach Anspruch 1, dadurch gekennzeichnet, daß die Blende (7) ein topfförmiger Körper mit axial gerichteten Zähnen als Blendenteilen (8) ist.

3. Handwerkzeugmaschine nach Anspruch 2, dadurch gekennzeichnet, daß die als Zähne geformten Blendenteile (8) trapezförmig ausgebildet sind.

**Claims**

1. Hand tool machine (1), in particular drilling machine, with a device for the speed control of its work spindle (4) dependent on the tool diameter by means of a tool-diameter dependent axially displaceable contact element (5, 6, 7) characterized in that the axially displaceable contact element (5, 6, 7) comprises an axially symmetric diaphragm (7), the axial position of which in relation to a light or Hall barrier (10) crossing its axis of rotation is dependent on the diameter of the tool (18) clamped with the tool clamping element (5) and has identical diaphragm parts (8) uniformly distributed about the circumference of the diaphragm (7) of varying width in the direction of the axis of rotation (axis of rotation of the work spindle 4) and in that the light or Hall barrier (10) is connected by means of an evaluation circuit (12) known per se to a speed governor (14) of the motor (2) of the hand tool machine (1).

2. Hand tool machine according to Claim 1, characterized in that the diaphragm (7) is a pot-shaped body with axially directed teeth as diaphragm parts (8).

3. Hand tool machine according to Claim 2, characterized in that the diaphragm parts (8) shaped as teeth are trapezoidally designed.

**Revendications**

1.- Machine outil-portative (1), notamment perceuse, avec un dispositif pour la commande du diamètre de l'outil, de la vitesse de rotation de sa broche porte outil (4) au moyen d'un organe de palpage (5, 6, 7) susceptible de se déplacer axialement en fonction du diamètre de l'outil, machine caractérisée en ce que l'organe de palpage (5, 6, 7) susceptible de se déplacer axialement comprend un écran (7) présentant une symétrie de révolution et dont la position axiale par rapport à un barrage (10) photoélectrique ou de Hall, croisant l'age de rotation de cet écran, est dépendante du diamètre de l'outil serré dans le mandrin porte outil (5), et que les parties d'écran (8) identiques entre elles et uniformément réparties sur la périphérie de l'écran (7), ont une largeur se modifiant en direction de l'axe de rotation (axe de rotation de la broche porte outil 4), tandis que le barrage photoélectrique ou le barrage de Hall (10) est relié, par l'intermédiaire d'un circuit d'exploitation en soi connu (12), à un régulateur de vitesse de rotation (14) du moteur (2) de la machine outil portative (1).

2.- Machine outil portative selon la revendication 1, caractérisée en ce que l'écran (7) est une structure en forme de cuvette avec comme parties d'écran (8) des dents dirigées axialement.

3.- Machine outil portative selon la revendication 2, caractérisée en ce que les parties d'écran (8) constituées par des dents, sont de forme trapézoïdale.

Fig. 1

Fig. 2.1

Fig. 2.2

Fig. 2.3

Fig. 2